# EUROPEAN PATENT SPECIFICATION

(11) **EP 0 910 521 B1**
(45) Date of publication and mention of the grant of the patent: **25.09.2002**
(21) Application number: 97932123.9
(22) Date of filing: 11.07.1997
(51) Int. Cl.: B60R 21/20, B60Q 5/00

(54) **ARRANGEMENT FOR A VEHICLE STEERING WHEEL**
ANORDNUNG FÜR EIN FAHRZEUGLENKRAD
DISPOSITIF POUR VOLANT DE VEHICULE

(30) Priority: 11.07.1996 SE 9602747
(43) Date of publication of application: 28.04.1999
(73) Proprietor: Volvo Car Corporation, 405 31 Göteborg (SE)
(72) Inventor: BERGSTRÖM, Pär, S-414 52 Göteborg (SE); BERNDTSSON, Ove, S-417 43 Göteborg (SE)
(74) Representative: Andersson, Per Rune
(86) International application number: SE9701264
(87) International publication number: WO98002337

(56) References cited:
- EP-A- 0 330 306
- EP-A- 0 586 055
- WO-A-97/26256
- US-A- 5 062 661
- US-A- 5 303 952
- US-A- 5 350 190

## Description

### TECHNICAL FIELD:

The invention relates to an arrangement for the activation of a signalling device in a vehicle, according to the preamble of appended claim 1.

### BACKGROUND OF THE INVENTION:

Motor vehicles are normally equipped with signal horns. The signal horn in a vehicle can usually be activated by the driver manually using a switch which is placed on, or in the vicinity of, the steering wheel of the vehicle. Due to this location of the switch, the driver can activate the signal horn in a simple manner in case of, for example, an emergency.

Furthermore, modern motor vehicles are often equipped with at least one air-bag for the protection of those travelling in the vehicle. In a previously known manner, such an air-bag is arranged to be activated in the event of a collision with the vehicle. The activation of the air-bag is carried out by means of an acceleration sensor located in the vehicle, which in turn is arranged to be able to activate a gas generator for inflation of the air-bag. In so doing, gas is caused to flow into the air-bag, which is then shaped to a smooth energy-absorbing cushion which attenuates a person's motion forward in case of sharp braking of the vehicle.

As regards the driver of the vehicle, he can be protected by means of an air-bag which preferably is arranged in connection to the hub of the steering wheel of the vehicle, and which can be inflated in the direction of the driver's torso. For this purpose, a special air-bag module, which comprises the air-bag itself and the above-mentioned gas generator which is used to inflate the air-bag, can be placed in the hub of the steering wheel. This air-bag module can furthermore be arranged in connection to the switch of the signal horn in such a way that the driver, by exerting pressure on the air-bag module, causes the switch to close. This, in turn, causes the activation of the signal horn as well.

From patent document US-A-5283404 that shows the features of the preamble of claim 1, a system for motor vehicles which comprises an air-bag module arranged in the hub of a steering wheel is previously known. The system also comprises a plurality of switches for the activation of a signal horn. The switches are arranged in connection to the air-bag module. Furthermore, the switches are of the membrane-switch kind, and can be activated when the user exerts pressure on the air-bag module, which then in turn is pressed against the switches, so that the signal horn is activated.

A drawback of this previously known arrangement is that there is a need for special spring elements, against which the air-bag module rests. These spring elements cause increased manufacturing costs, since more steps and more components are needed during manufacturing. Furthermore, the spring elements use up room, at the same time as they increase the total weight of the previously known arrangement.

### SUMMARY OF THE INVENTION:

The object of the present invention is thus to achieve an improved arrangement in the steering wheel of a vehicle, which arrangement primarily is intended for the activation of a signal horn, in which the drawbacks of previously known arrangements of this kind are eliminated. This object is achieved by means of an arrangement of the initially mentioned kind, the characteristics of which will become evident from appended claim 1.

The invention is intended for the activation of a signal device in a vehicle. According to the invention, there is at least one switch arranged in connection to the steering wheel of the vehicle, which switch is arranged to activate the signal device. The invention furthermore comprises at least one function unit of the vehicle, which is arranged in the vicinity of said switch, and which can be moved in a predetermined direction from an idle position and towards said switch for activation of the switch. The invention is based on the switch being shaped integrated with a spring element to affect said function unit in the direction of said idle position. In this way, an arrangement is obtained with a built-in spring function of the switch.

The switch is preferably of the membrane-switch kind, and is shaped with a springing organ, against which said function unit rests. In a preferred embodiment, this function unit consists of an air-bag module, which in turn comprises an air-bag and means for inflation of the air-bag.

Using an arrangement according to the invention, a reliable function for activation of the signal horn is obtained. Furthermore, there is an advantage in that the switch which is of the membrane-switch kind has a very long operational life. There is furthermore a reduced consumption of material and components, which in turn causes lower manufacturing costs than in previously known systems of a similar kind. Furthermore, the invention needs less room than previous arrangements, which results in a more compact packing of the steering wheel and its components. Also, the weight is lower than that of previously known arrangements.

Since the invention comprises switches of the membrane-switch kind with an integrated spring element, there is a distinct and exact perception for the user when he depresses the air-bag module in order to activate the signal horn.

Advantageous embodiments will become evident from the appended dependent claims.

### BRIEF DESCRIPTION OF THE DRAWINGS:

The invention will in the following be described in more detail with reference to an example of embodiment which is shown in the appended drawings, in which:
- Fig. 1: schematically in a perspective view shows a disassembled steering wheel equipped with an arrangement according to the invention,
- Fig. 2: shows a cross-sectional view of the invention in an assembled state,
- Fig. 3: shows a perspective view of a switch according to the invention, and
- Fig. 4: schematically shows an electrical circuit diagram of the arrangement according to the invention.

### PREFERRED EMBODIMENT:

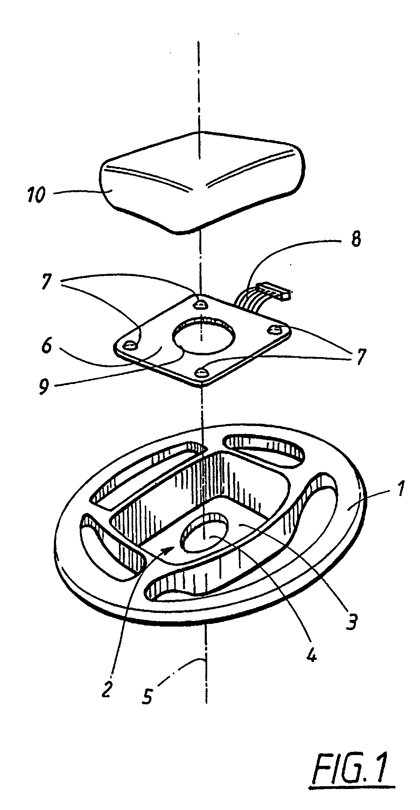

Fig. 1 shows an arrangement according to the present invention in a disassembled state. According to the preferred embodiment, the invention is arranged in connection to a steering wheel in a motor vehicle. The figure shows a steering wheel frame or a steering wheel module 1, which preferably is made of steel, and which constitutes a supporting frame which is intended to be equipped with (not shown) upholstery and padding similar to the design of conventional steering wheels. The steering wheel module 1 is, in a known manner, intended to be assembled on a (not shown) steering wheel tube.

Furthermore, the steering wheel module 1 is shaped with a recessed portion 2 with a bottom plate 3. In the bottom plate 3 there is an aperture 4 which is arranged essentially symmetrically around the axis of rotation 5 of the steering wheel module 1. The aperture 4 is utilized for running cables (not shown).

Furthermore, the invention comprises a switching unit 6 which is arranged on, or in the immediate vicinity of, the bottom plate 3. The switching unit 6 is shaped as a plate, with the function of a supporting element for at least one, but preferably four, switches 7. The switches 7 are electrically connected to a connector 8, which in turn is connected to a control unit (not shown in Fig. 1), which is arranged to activate a signal horn in the vehicle, as will be described below. Each of the switches 7 can thus be used to activate a signal horn. Furthermore, each of the switches 7 is preferably of the membrane-switch kind, and is, as will be described in detail below, formed with a spring element in the shape of a dome-shaped element. Furthermore, the switching unit 6 is preferably shaped with a through-opening 9.

On top of the switching unit 6, there is arranged a further function unit in the form of an air-bag module 10 which, as such, is of a previously known kind and which comprises an air-bag and means for inflation of the air-bag. These means are preferably a gas generator. The air-bag module 10 is enclosed in a cover, for example a cast aluminum cover, and is arranged at the bottom plate 3 by means of a (not shown) screw union. As will be explained below, the air-bag module 10 is arranged to be moved between an idle position and an additional position in which at least one of the switches 7 is closed. When the air-bag module 10 is in the latter position, the signal horn of the vehicle is activated.

The switching unit 6 can be fixedly arranged on top of the bottom plate 3 in the steering wheel module 1, or can alternatively be arranged on the underside of the air-bag module 10. The switching unit 6 is preferably attached to the bottom plate 3, or alternatively the air-bag module 10, by means of a suitable glue or by means of double-sided adhesive tape. In a manufacturing process, the switching unit 6 can thus be arranged in advance on either the steering wheel module 1 or the air-bag module 10, thus causing a simplified assembling process in connection with the arrangement according to the invention.

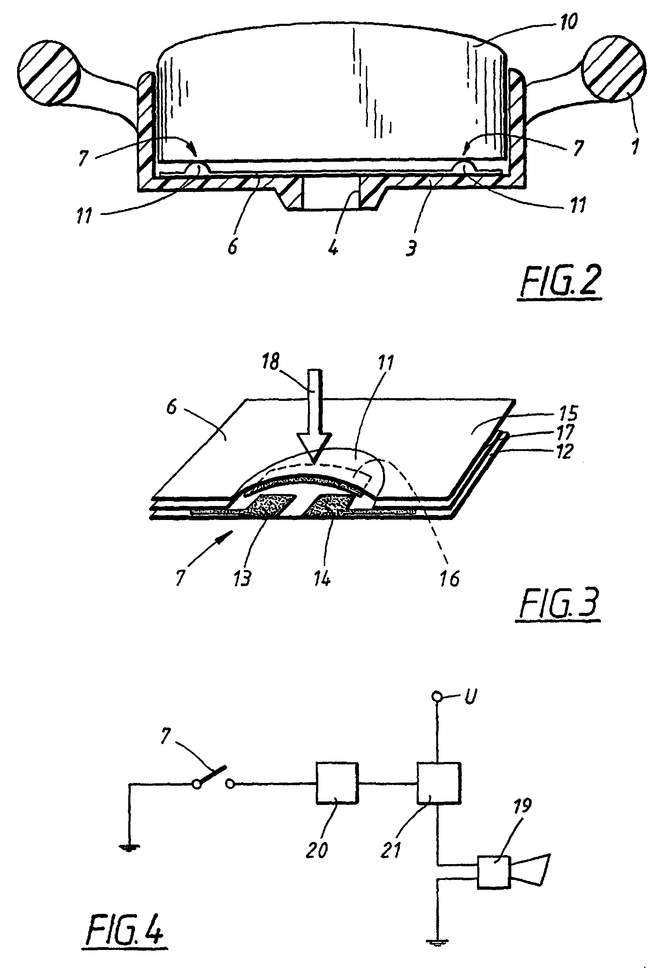

Fig. 2 is a cross-sectional view which shows the invention in an assembled state. From the figure, it can be seen that the switching unit 6 rests on the bottom plate 3 of the steering wheel module 1, and that the air-bag module 9 in an idle state, i.e. in an unaffected state, is adjacent to the switching unit 6. As has been mentioned above, each of the switches 7 is formed with a spring element 11 in the shape of an essentially dome-formed element. For this purpose, each of the spring elements 11 is raised a certain distance relative to the bottom plate 3, i.e. it has an extension in a direction which is opposite to the direction in which the driver exerts a force against the air-bag module 10 when activating the signal horn.

Fig. 3 shows in detail the design of the switch 7, which comprises a plurality of layers, preferably three layers, of which a lower layer 12 in predetermined positions supports two electrically conducting contact elements 13, 14. Furthermore, the switching unit 6 comprises an upper layer 15 which supports an additional electrically conducting contact element 16 which faces the two contact elements 13, 14 of the lower layer 12. Furthermore, the lower level 12 is separated from the upper layer 15 in certain areas by means of an intermediate layer 17. The various contact elements 13, 14, 16 are preferably areas of thin coatings of graphite, silver, gold, copper or some other suitable electrically conducting material. The switch 7 can be closed by the spring element 11 being compressed by a force in the direction indicated with an arrow 18, thus closing an electrical connection between the contact elements 13 and 14 by means of the contact element 16. The different layers 12, 15, 17, are preferably thin films of polyester plastic or a corresponding synthetic material.

The spring element 11 is shaped as a dome-formed element in the upper layer 15. With renewed reference to Fig. 2, it can be seen that the air-bag module 10 normally rests against the switches 7. When the signal horn is to be activated, the air-bag module 10 is depressed in the direction of the bottom plate 3, which causes the air-bag module 10 to be moved out of its idle position, and the spring elements 11 are compressed. When the air-bag module 10 is no longer affected by a force, it is returned to its idle position by means of the spring force of the spring elements 11, which strive to resume their dome-shaped form.

The properties of the spring elements 11 as regards elasticity and springing are adjusted to the weight of the air-bag module 10. These properties must also be adjusted to the force which is deemed to be suitable to be exerted on the air-bag module 10 by the driver in order for at least one switch 7 to be closed. For these purposes, the height, diameter and shape of the dome 11 can also be adapted to a certain given application of the invention. The spring properties of each spring element 11 are also determined by, among other things, the thickness of the upper layer 15 and the stiffness and the elastic properties of the material used in the upper layer 15. The dimensions of the switches 7 can be varied according to the application in question. The diameter of the spring elements is preferably about 10-20 mm.

Fig. 4, in a simplified form, shows a circuit diagram which shows how each switch 7 can be connected in order to enable the activation of a signal horn 19 in a vehicle. Although the drawing only shows one switch 7, the invention can as stated above, comprise a plurality of such switches. The switch 7 is connected between ground and a central control unit 20 via the connector 8 (see Fig. 1). The control unit 20 is arranged to detect whether the switch 7 is closed. If this is the case, the control unit 20 emits a signal to a relay 21 which receives a voltage U. The relay is in turn connected to the signal horn 19, which is activated and emits a sound-signal when the relay 21 has been activated by the control unit 20.

The invention is not limited to the embodiments described above, but can be varied within the scope of the appended claims. The switching unit 6 can, for example, comprise various arrangements of switches 7, for example with varying locations along the upper side of the switching unit 6. The number of switches 7 can also vary. The number of switches 7 and their location is preferably chosen depending on typical pressure points on the air-bag module 10 which are utilized by a user when activating the signal horn.

Furthermore, the control unit 20 can be so arranged that the signal horn 19 is activated if, for example, two (or more) switches 7 are closed.

Furthermore, the arrangement according to the invention can also be utilized when the function unit is not an air-bag module 10. There are vehicles which are not equipped with air-bags, which means that instead of the air-bag module 10, some other kind of function unit or module can be placed so that it rests on top of the switching unit 6.

A possible variant of the invention is that the switching unit 6 (see Fig. 1) is arranged with the switches 7 facing downwards, i.e. towards the bottom plate 3. For this purpose, the switching unit 6 is preferably arranged in advance on the underside of the air-bag module 10.

Finally, the spring element 11 can be formed in various manners, for example regarding size, geometrical shape and spring properties.

## Claims

1. An arrangement for the activation of a signal device (19) in a vehicle, comprising a steering wheel (1), at least one switch (7) arranged in connection to the steering wheel (1) and arranged for the activation of the signal device (19), and additionally at least one function unit (10) of the vehicle which is arranged in the vicinity of said switch (7) and which is movable from an idle position in the direction of said switch (7) for the activation of the switch (7), **characterized in that** said switch (7) is formed integrated with an essentially dome-shaped spring element (11) in order to affect said function unit (10) in the direction of said idle position, and that said switch (7) is arranged on a supporting element (6), which in turn is arranged in connection to said steering wheel (1), whereby said function unit (10) in its idle position rests against the spring element (11).

2. Arrangement according to claim 1, **characterized in that** said switch (7) consists of at least two layers (12, 15, 17), with a lower level (12) comprising first electrical connectors (13, 14), and **in that** said spring element (11) is shaped integrated in an upper layer (15) which comprises a further electrical connector (16) which faces said first connectors (13, 14), and in which the switch (7) is closed in case of contact between said connectors (13, 14, 16).

3. Arrangement according to claim 2, **characterized in that** said layers (12, 15, 17) consist of films of synthetic material.

4. Arrangement according to any of claims 1-3, **characterized in that** said at least one switch (7) is arranged on a supporting element (6) which in turn is arranged on said steering wheel (1) with the function unit (10) in its idle position resting against said supporting element (6), and **in that** said spring elements (11) rest against said steering wheel (1).

5. Arrangement according to any one of the preceding claims, **characterized in that** said supporting element (6) is arranged on the underside of said function unit (10).

6. Arrangement according to any one of claims 1-4, **characterized in that** said supporting element (6) is assembled on a surface (3) which faces the function unit (10) in connection to the steering wheel (1).

7. Arrangement according to any of the previous claims, **characterized in that** said function unit (10) is an air-bag module (10) which comprises an air-bag and means for inflation of the air-bag, in the event of a collision with the vehicle.

8. Vehicle comprising an arrangement for the activation of a signal device (19) according to any of the previous claims.

## Patentansprüche

1. Anordnung zur Aktivierung einer Signaleinrichtung (19) in einem Fahrzeug, mit einem Lenkrad (1), wenigstens einem Schalter (7), der in Verbindung mit dem Lenkrad (1) und zur Aktivierung der Signaleinrichtung (19) angeordnet ist und zusätzlich wenigstens eine Funktionseinheit (10) des Fahrzeugs aufweist, welche in der Nähe des Schalters (7) angeordnet ist, und welche aus einer Ruhestellung in die Richtung des Schalters (7) zur Aktivierung des Schalters (7) bewegbar ist,
**dadurch gekennzeichnet,**
**dass** der Schalter (7) integral mit einem im Wesentlichen domförmigen Federelement (11) zum Wirken auf die Funktionseinheit (10) in die Richtung der Ruhestellung gebildet ist, und dass der Schalter (7) auf einem Trägerelement (6) angeordnet ist, welches seinerseits in Verbindung mit dem Lenkrad (1) angeordnet ist, wobei die Funktionseinheit (10) in seiner Ruhestellung gegen das Federelement (11) ruht.

2. Anordnung nach Anspruch 1,
**dadurch gekennzeichnet, dass** der Schalter (7) wenigstens zwei Schichten (12, 15, 17) aufweist, wobei eine untere Lage (12) erste elektrische Anschlussstücke (13, 14) aufweist, und dass das Federelement (11) integral in einer oberen Lage (15) gebildet ist, welche ein weiteres elektrisches Anschlussstück (16) aufweist, welches auf die ersten Anschlussstücke (13,14) weist, und in welchen der Schalter (7) im Fall des Kontakts zwischen den Anschlussstücken (13, 14, 16) geschlossen ist.

3. Anordnung nach Anspruch 2,
**dadurch gekennzeichnet, dass** die Schalter (12, 15, 17) aus Folien aus synthetischem Material bestehen.

4. Anordnung nach einem der Ansprüche 1 bis 3,
**dadurch gekennzeichnet, dass** wenigstens ein Schalter (7) auf einem Trägerelement (6) angeordnet ist, welches seinerseits auf dem Lenkrad (1) angeordnet ist, wobei die Funktionseinheit (10) in ihrer Ruhestellung gegen das Trägerelement (6) ruht, und dass die Federelemente (11) gegen das Lenkrad (1) ruhen.

5. Anordnung nach einem der vorangehenden Ansprüche, **dadurch gekennzeichnet, dass** das Trägerelement (6) an der Unterseite der Funktionseinheit (10) angeordnet ist.

6. Anordnung nach einem der Ansprüche 1 bis 4, **dadurch gekennzeichnet, dass** das Trägerelement (6) auf einer Oberfläche (3) aufgebaut ist, welche auf die Funktionseinheit (10) in Verbindung mit dem Lenkrad (1) weist.

7. Anordnung nach einem der vorangehenden Ansprüche, **dadurch gekennzeichnet, dass** die Funktionseinheit (10) ein Airbagmodul (10) ist, welches einen Airbag und eine Einrichtung zum Aufblasen des Airbags in dem Fall einer Kollision mit dem Fahrzeug aufweist.

8. Fahrzeug, welches eine Anordnung zur Aktivierung einer Signaleinrichtung (19) nach einem der vorangehenden Ansprüche aufweist.

## Revendications

1. Ensemble d'activation d'un dispositif (19) de signalisation dans un véhicule, comprenant un volant (1), au moins un interrupteur (7) associé au volant (1) et destiné à activer le dispositif de signalisation (19), et en outre au moins une unité fonctionnelle (10) du véhicule qui est placée au voisinage de l'interrupteur (7) et qui est mobile depuis une position de repos dans la direction de l'interrupteur (7) pour l'activation de l'interrupteur (7), **caractérisé en ce que** l'interrupteur (7) est intégré à un élément de ressort (11) en forme de dôme pratiquement destiné à affecter l'unité fonctionnelle (10) dans la direction de la position de repos, et **en ce que** l'interrupteur (7) est placé sur un élément de support (6) qui est lui-même associé au volant (1), si bien que l'unité fonctionnelle (10), dans sa position de repos, est en appui contre l'élément de ressort (11).

2. Ensemble selon la revendication 1, **caractérisé en ce que** l'interrupteur (7) est formé d'au moins deux couches (12, 15, 17), avec un niveau inférieur (12) comprenant des premiers connecteurs électriques (13, 14), et **en ce que** l'élément de ressort (11) a une forme intégrée à une couche supérieure (15) et qui comprend un connecteur électrique supplémentaire (16) tourné vers les premiers connecteurs (13, 14), et dans lequel l'interrupteur (7) est fermé en cas de contact entre les connecteurs (13, 14, 16).

3. Ensemble selon la revendication 2, **caractérisé en ce que** les couches (12, 15, 17) sont formées de film d'un matériau de synthèse.

4. Ensemble selon l'une quelconque des revendications 1 à 3, **caractérisé en ce que** l'interrupteur au moins (7) est placé sur un élément de support (6) qui est lui-même disposé sur le volant (1) avec l'unité fonctionnelle (10) dans sa position de repos en appui contre l'élément de support (6), et **en ce que** les éléments de ressort (11) sont en appui contre le volant (1).

5. Ensemble selon l'une quelconque des revendications précédentes, **caractérisé en ce que** l'élément de support (6) est disposé à la face inférieure de l'unité fonctionnelle (10).

6. Ensemble selon l'une quelconque des revendications 1 à 4, **caractérisé en ce que** l'élément de support (6) est assemblé sur une surface (3) qui est tournée vers l'unité fonctionnelle (10) associée au volant (1).

7. Ensemble selon l'une quelconque des revendications précédentes, **caractérisé en ce que** l'unité fonctionnelle (10) est un module de sac gonflable (10) qui comprend un sac gonflable et un dispositif de gonflage du sac gonflable en cas de collision du véhicule.

8. Véhicule comprenant un ensemble d'activation d'un dispositif de signalisation (19) selon l'une quelconque des revendications précédentes.
